# EUROPÄISCHE PATENTANMELDUNG

(11) **EP 3 979 019 A1**
(43) Veröffentlichungstag der Anmeldung: **06.04.2022**
(21) Anmeldenummer: 20199424.1
(22) Anmeldetag: 30.09.2020
(51) Int. Cl.: G05B 19/418, G06F 3/048, G06F 9/50

(54) **VERFAHREN ZUM BEDIENEN UND BEOBACHTEN EINER ZU STEUERNDEN TECHNISCHEN ANLAGE, BEDIEN- UND BEOBACHTUNGSSYSTEM UND PROZESSLEITSYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Beim Bedienen und Beobachten einer zu steuernden technischen Anlage wird üblicherweise innerhalb einer Aktualisierungszeit ein eine Vielzahl unterschiedlicher Bildelemente umfassendes Anlagenbild auf einem Operator Station Client gezeichnet. Innerhalb der Bildelemente können Daten von verschiedenen Applikationen dargestellt werden. Das Anlagenbild wird in einem Visualisierungsdienst eines Operator-Station-Servers während des Betriebs der technischen Anlage erzeugt, nachdem es in einer Engineering-Phase erstellt und vorkonfiguriert wurde. Erfindungsgemäß passt der Visualisierungsdienst gemäß einer in der Engineering-Phase vorgegebenen Vorschrift bei einer Änderung der in einem Bildelement dargestellten Daten eine Zeitdauer für das Zeichnen des Anlagenbilds dynamisch an, wobei zusätzlich Abhängigkeiten und/oder Eigenschaften der Bildelemente untereinander berücksichtigt werden. Auf diese Weise wird vorteilhaft eine dynamisch kollaborierende Leistungsadaption von verteilten Applikationen in heterogenen Anlagenbildern erzielt.

## Beschreibung

Die Erfindung betrifft ein Verfahren zum Bedienen und Beobachten einer zu steuernden technischen Anlage gemäß dem Oberbegriff des Anspruchs 1. Die Erfindung betrifft ferner ein Bedien- und Beobachtungssystem gemäß dem Oberbegriff des Anspruchs 7 zur Durchführung des Verfahrens und ein entsprechend geeignetes Prozessleitsystem.

Für die Bedienung und Beobachtung verfahrenstechnischer Anlagen werden symbolische Anlagenbilder (eng. Panels) erstellt, die die verfahrenstechnischen Zusammenhänge - insbesondere zwischen den Prozessobjekten - abstrahiert darstellen. Anlagenbilder setzen sich aus verschiedenen Bedien- und Anzeigeelementen zusammen. Dazu gehören: statische Symbole (z.B. Leitungen, Rechtecke, usw.), dynamisierte Symbole (z.B. in Abhängigkeit von Prozesswerten Leitungen mit Farbumschlag, Rechtecke mit Füllständen, usw.), Block-Symbole (zur dynamisierten Visualisierung verfahrenstechnischer Prozessobjekte), komplexe Kontrollanzeigen (z.B. Trendanzeigen, Meldefolgeanzeigen, usw.) und so genannte Container, welche abgeschlossene Bildeinheiten darstellen, um Inhalte aus unabhängigen und eigenständigen Quellen visualisieren zu können (z.B. Webcams, Anlagenbilder modularer Anlagenteile (Package Units), Apps (z.B. Regleroptimierer, KPI Berechnungen), usw.). Anlagenbilder werden im Engineering projektiert, d.h. Symbole, Dynamisierungen, komplexe Kontrollanzeigen, usw. werden positioniert und deren Eigenschaften festgelegt.

Container in Anlagenbildern werden durch unterschiedliche Technologien realisiert - in modernen weborientierten Leitsystemen z.B. durch so genannte iFrames oder auf Grundlage der iFrame basierten SWAC Technologie (SWAC = Siemens Web Application Collaboration). Bei der SWAC-Technologie handelt es sich um einen Mechanismus, der die die Interoperabilität zwischen den Applikationen von Benutzern und Anbietern fördert, da es immer notwendiger wird, verschiedene Applikationen in ein System zu integrieren, zum Beispiel eine Applikation von einer Kundenseite und eine, die von einem Dienstleister zur Verfügung gestellt wird. Die SWAC-Technologie bietet mit einem interoperablen Mechanismus für die Integration eine Lösung sowie ein JavaScript-Framework, das den Prozess des Hostings von Applikationen anderer Parteien (im Allgemeinen hat diese Art von Anwendungen eine "Container"-Rolle) oder das Hosting einiger Applikationen (diese Art von Anwendungen haben eine "Komponenten"-Rolle) erleichtern soll.

Heterogene Anlagenbilder weisen demnach Bedien- und Anzeigeelemente aus entkoppelten Applikationen auf. Das Anlagenbild wird häufig nicht durch eine Applikation (z.B. Plant Display) dynamisiert, sondern durch viele unterschiedliche Applikationen, die auf einem, aber häufig auch auf unterschiedlichen Servern lokalisiert sein können. Diese Modularität ist zur Adressierung von Industrie 4.0-Anforderungen von flexiblen, modularen und dynamischen, re-konfigurierbaren Anlagen sinnvoll und notwendig, stellt jedoch die Visualisierung der heterogenen Anlagenbilder in den Operator Station Clients im Hinblick auf Stabilität, Zuverlässigkeit und Leistungsfähigkeit vor entsprechende Herausforderungen. Sind in einem Anlagenbild mehrere Container eingebettet und beansprucht der Inhalt eines Containers - z.B. eine Meldefolgeanzeige - für sich mehr Zeit für das Zeichnen (Rendering), so werden andere Container wie auch das restliche Anlagenbild negativ beeinflusst. Die hieraus resultierenden Probleme sind vielfältig und reichen von träge dynamisierten Anlagenbildern, über "eingefrorene" und somit nicht bedienbare Anlagenbilder, bis hin zu abstürzenden Operator Station Clients, wenn sich die Aktualisierungsanforderungen aufstauen und der Operator Station Client mangels verfügbarem Speicher abstürzt. In diesen besonders schwerwiegenden Fällen kann es sogar zum Ausfall der Bedienung und Beobachtung der verfahrenstechnischen Anlage kommen.

Der Erfindung liegt daher die Aufgabe zugrunde, ein Verfahren anzugeben, mittels dessen ein effizientes und sicheres Bedienen und Beobachten einer zu steuernden technischen Anlage erreicht wird und welches insbesondere eine kontinuierliche Visualisierung der Anlagenbilder bei der Prozessführung erlaubt. Des Weiteren soll ein zur Durchführung des Verfahrens besonders geeignetes Bedien- und Beobachtungssystem für ein Prozessleitsystem und ein entsprechendes Prozessleitsystem angegeben werden.

Diese Aufgabe wird durch ein Verfahren mit den Merkmalen des Anspruchs 1 gelöst. Außerdem wird die Aufgabe durch ein Bedien- und Beobachtungssystem gemäß Anspruch 7 und einem Prozessleitsystem gemäß Anspruch 8 gelöst. Vorteilhafte Weiterbildungen ergeben sich aus den abhängigen Ansprüchen.

Beim Bedienen und Beobachten einer zu steuernden technischen Anlage wird üblicherweise innerhalb einer Aktualisierungszeit ein eine Vielzahl unterschiedlicher Bildelemente umfassendes Anlagenbild auf einem Operator Station Client gezeichnet, wobei innerhalb der Bildelemente Daten von verschiedenen Applikationen dargestellt werden. Das Anlagenbild wird in einem Visualisierungsdienst eines Operator-Station-Servers während des Betriebs der technischen Anlage erzeugt, nachdem es in einer Engineering-Phase erstellt und vorkonfiguriert wurde.

Gegenstand der Erfindung ist es nun, dass der Visualisierungsdienst gemäß einer in der Engineering-Phase vorgegebenen Vorschrift bei einer Änderung der in einem Bildelement dargestellten Daten eine Zeitdauer für das Zeichnen des Anlagenbilds dynamisch anpasst, wobei zusätzlich Abhängigkeiten und/oder Eigenschaften der Bildelemente untereinander berücksichtigt werden.

Auf diese Weise wird vorteilhaft eine dynamisch kollaborierende Leistungsadaption von verteilten Applikationen in heterogenen Anlagenbildern erzielt. Der große Vorteil der Erfindung liegt insbesondere darin, dass die Zeitdauer für das Zeichnen verschiedenster Applikationen, die auf unterschiedlichen Servern lokalisiert sein können, durch die Erfindung flexibel konfigurierbar ist und nun optimal einstellbar ist. Bereits in der Engineering-Phase kann eine zeitliche Einteilung der Zeitdauer für das Zeichnen für die Zeitspanne der Aktualisierungszeit berechnet werden. Die Erfindung erlaubt durch einen optimalen Bildaufbau innerhalb der vorgegebenen Aktualisierungszeiten ein effizientes und sicheres Bedienen und Beobachten einer zu steuernden technischen Anlage und insbesondere eine robuste und kontinuierliche Visualisierung der Anlagenbilder während der Prozessführung.

In einer besonders vorteilhaften Ausführung werden zu dynamisierende Bildelemente als Web-Container realisiert, in denen während des Betriebs der technischen Anlage die Bildelemente gezeichnet werden und welche in entsprechende Applikationen eingebettet sind. Diese Container weisen eine Vielzahl von Eigenschaften auf. Erfindungsgemäß wird nun die Zeitdauer für das Zeichnen eines Bildelements als Eigenschaft des jeweiligen Containers aufgenommen. Nach Initialisierung des Visualisierungsdienst kann dieser nun jeder Applikation, die mit der Visualisierung eines Bildelementes im Zusammenhang steht, in Abhängigkeit der Eigenschaften des entsprechenden Containers mitteilen, welche Zeitdauer für das Zeichnen des Bildelements während der Aktualisierungszeit zur Verfügung steht. Der Vorteil der Verknüpfung der Web-Container einer Applikation und der Zeitdauer für das Zeichnen liegt darin, dass eine maximale Flexibilität bezogen auf die Hardware eines Bedien- und Beobachtungssystems erreicht wird. Hardware-Zuordnungen von Applikationen spielen keine Rolle mehr. Auch die Operator Station Clients werden geräteunabhängiger, da bei leistungsschwachen Geräten die erfindungsgemäße adaptive Leistungsskalierung zum Tragen kommen kann.

Durch die Verknüpfung der Applikationen mit den Web-Container-Eigenschaften ergibt sich ein weiterer Vorteil, nämlich dass gemäß einer weiteren vorteilhaften Ausführung die Applikationen auf einem oder auf unterschiedlichen Servern lokalisiert sein können. Damit ist ein optimaler Bildaufbau innerhalb der Aktualisierungszeit des Anlagenbilds auch vor dem Hintergrund verteilter Systeme gewährleistet. Insbesondere in Cloud-Strukturen und verteilten Server-Strukturen erreicht die Erfindung daher ihre zahlreichen Vorteile.

Gemäß weiteren vorteilhaften Ausführungsvarianten sind bei der Anpassung der Zeitdauer für das Zeichnen der Bildelemente pro Bildelement die Anzahl der zu zeichnenden Punkte, Korrekturparameter zur Modifikation der Aktualisierungszeit oder Korrekturparameter der Bildwiederholfrequenz umfasst. Der Vorteil dieser Ausführungen besteht in einer maximalen Adaptivität. Die Zeitdauern für das Zeichnen eines Bildelements werden je nach Bedarf eingestellt. Das Kontingent der Aktualisierungszeit des Anlagenbilds kann beliebig auf Zeitdauern für das Zeichnen der Bildelemente aufgeteilt werden. Ein Anlagenbild kann sich somit dynamisch und adaptiv "einschwingen".

In einer sehr vorteilhaften Ausführungsvariante werden bei der Anpassung der Zeitdauer für das Zeichnen auch Parameter oder Werte des in der technischen Anlage ablaufenden Prozesses berücksichtigt. Dies erlaubt bei der Erzeugung eines Anlagenbilds in Runtime, also während des laufenden Betriebs, eine dynamische und adaptive Einstellung auf den jeweiligen verfahrenstechnischen Zustand der technischen Anlage (z.B. auf höhere Alarmlasten, höhere Volatilität in Trendkurven, usw.). Eine optimale Bedienung und Beobachtung sind somit auch bei unterschiedlichsten verfahrenstechnischen Zuständen sichergestellt.

In einer Ausführung der Erfindung werden Objektmodelle der Anlagenbilder durch die Hinterlegung der Zeitdauern für das Zeichnen der zu dynamisierenden Bildelemente erweitert. Dies erlaubt im Umfeld der objektorientierten Programmierung und Modellierung mit Objektmodellen als Klassendiagramm eine wesentliche Vereinfachung bei der Darstellung von Bildelementen.

Das erfindungsgemäße Verfahren wird bevorzugt in Software oder in einer Kombination aus Soft-/Hardware implementiert, so dass die Erfindung auch ein Bedien- und Beobachtungssystem und ein Prozessleitsystem betrifft, welche dazu ausgebildet sind, ein Verfahren der beschriebenen Art durchzuführen.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:
- Figur 1: ein Funktionsschema eines Prozessleitsystems zur Steuerung eines Prozesses mit einem Client, auf dem ein heterogenes Anlagenbild dargestellt ist und mit mindestens einem Operation Station Server mit angedeuteter Softwarearchitektur zur Darstellung des Anlagenbilds
- Figur 2: ein weiters Funktionsschema des Prozessleitsystems mit angedeuteter Softwarearchitektur zur Implementierung des erfindungsgemäßen Verfahrens

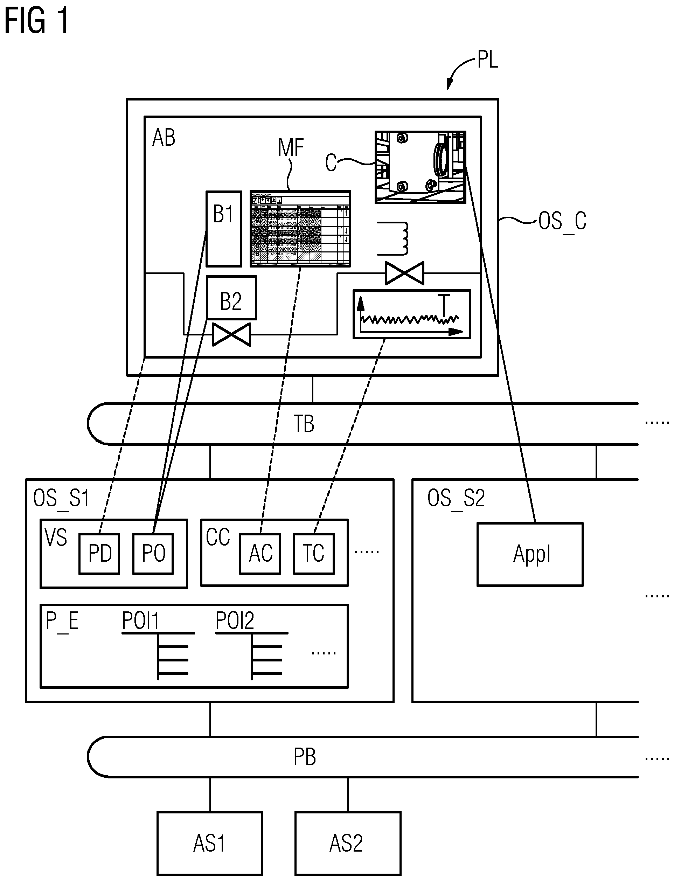

In Figur 1 ist ein Funktionsschema eines Prozessleitsystems PL mit seinen Bestandteilen dargestellt, das im vorliegenden Ausführungsbeispiel einen Operator Station Client OS_C, Operator Station Server OS_S1 und OS_S2 und Automatisierungsgeräte AS1 und AS2 umfasst. Das Prozessleitsystem kann selbstverständlich eine Vielzahl von Operator Station Clients, Servern und Automatisierungsgeräten aufweisen. Die Automatisierungsgeräte sind einerseits über einen Anlagenbus PB mit den Operator Station Servern und andererseits über mindestens einen weiteren hier nicht dargestellten Bus mit dezentralen Peripherien verbunden, an welche eine Vielzahl von Feldgeräten (Sensoren, Aktuatoren) angeschlossen sind.

Ein Bedien- und Beobachtungssystem besteht in der Regel aus einer Vielzahl von Operator Station Servern OS_S1, OS_S2, ..., OS_SN und zumindest einem Client Rechner OS_C. Der OS Client OS_C tauscht über ein weiteres Bussystem TB, welches hier als Terminalbus bezeichnet wird, Informationen und Daten mit den OS-Servern aus. Häufig ist das Prozessleitsystem derart ausgebildet, dass es eine weitere Komponente, eine Engineering Workstation, besitzt. Bei dieser handelt es sich um einen Rechner oder Server, der zur Datenübertragung an mindestens eines der Kommunikationssysteme TB und PB angeschlossen ist, und auf den ebenso über einen Client des Bedien- und Beobachtungssystems zugegriffen werden kann. Bei Bedarf können noch weitere Rechner oder Server mit den Kommunikationssystemen TB und PB verbunden werden.

In Fig. 1 sind neben Teilen der soeben beschriebenen Hardware-Konfiguration des Prozessleitsystems auch Teile der Software-Architektur zur Implementierung des erfindungsgemäßen Verfahrens in vereinfachter Form dargestellt.

So sind im OS Server eine Vielzahl von Funktionen zur Erzeugung eines Anlagenbildes mit seinen statischen und dynamischen Bildelementen als Software-Bausteine oder Softwarekomponenten (hier in Form von Rechtecken, abgekürzt SW-Komponenten) dargestellt. In Fig. 1 ist die Zugehörigkeit der jeweiligen SW-Komponente zu einem Bildelement jeweils durch dünne Linien (teilweise auch gestrichelt) angedeutet.

In dem Operator Station Server OS_S1 ist ein Visualisierungsdienst VS integriert, über den eine Übertragung von (Visualisierungs-)Daten an den Operator Station Client OS_C erfolgt. Der Visualisierungsdienst VS stellt über die Komponente PD das Anlagenbild AB mit all seinen statischen Bildelementen oder Bildsymbolen wie Ventilen, Leitungen, Behältern, Motoren etc. bereit. Neben den statischen Bildelementen umfasst das Anlagenbild ferner dynamisierte Bildelemente. Der Begriff "dynamisiert" wird hier stellvertretend für eine zeitliche Änderung der Visualisierung verwendet. Diese Änderung kann entweder durch den Prozess selbst (Temperaturmesswert eines Behälters ändert sich) oder durch den Operator (Eingabe: "Erhitze den Behälter auf eine Temperatur von 100°C") hervorgerufen. Als Folge jeder Änderung muss das Anlagenbild aktualisiert und neu gezeichnet werden. Eine typische Aktualisierungszeit für ein Anlagenbild liegt bei etwa 1 s. Die Aktualisierungszeit ist unabhängig von der Bildwiederholfrequenz des Monitors des Clients. Die meisten Monitore liefern eine Bildwiederholfrequenz von ca. 60 Hz. Das bedeutet, dass pro Sekunde 60 Einzelbilder vom Monitor dargestellt werden können. Bei der Aktualisierungszeit hingegen handelt es sich sozusagen um die Bildrate des Eingangssignals des Monitors.

Der Visualisierungsdienst VS umfasst ferner die Komponente PO, welche für die Darstellung der Prozessobjekte verantwortlich ist. Verfahrenstechnische Prozessobjekte sind beispielsweise Messstellen von Prozesswerten im Zusammenhang mit verfahrenstechnischen Objekten wie Regler, Ventile, Pumpen etc. Im Anlagenbild werden zu den Prozessobjekten gehörige Block-Symbole B1 und B2 dargestellt, wobei die Block-Symbole zur Prozessbeobachtung vorgesehen sind, um aktuelle Prozesswerte und Parameter während der Prozesssteuerung anzuzeigen. Es wird darauf hingewiesen, dass unter dem Begriff "Prozessobjekt" die jeweiligen Facetten eines Prozessobjektes verstanden werden, die im Operator-System in einem Prozessabbild P_E des Operator Station Servers OS_S1 und in den Automatisierungsgeräten AS1 und AS2 hinterlegt sind. So weist das Prozessabbild P_E von OS_S1 z. B. zu Prozessobjekten gehörige Prozessabbild-Bausteine POI1 und POI2 auf, die wiederum mit zu diesen Prozessobjekten gehörigen Automatisierungsbausteinen der Automatisierungsgeräte interagieren und auch mit der SW-Komponente PO wechselwirken, die für die Darstellung auf dem Client verantwortlich ist.

Neben dem Visualisierungsdient VS, der übergeordnet für die Visualisierung des in einer technischen Anlage ablaufenden Prozesses zur Runtime (= Laufzeit), also während des laufenden Betriebs, verantwortlich ist, beherbergt der OS Server weitere gegenüber der Komponente VS untergeordnete Visualisierungsdienste. In Fig. 1 ist beispielsweise noch die SW-Komponente CC dargestellt, welche die Darstellung komplexer Kontrollanzeigen (z.B. Trendanzeigen, Meldefolgeanzeigen, usw.) ermöglicht. Die in CC enthaltene Unter-Komponente AC hat die Funktion, eine Meldefolgeanzeige MF darzustellen. Die in CC enthaltene Unter-Komponente T hat die Funktion, eine Trendanzeige T eines Prozesswertes darzustellen.

Das Anlagenbild aus dem in Figur 1 gezeigten Ausführungsbeispiel umfasst zusätzlich ein Bild einer Webcam. Dieses ist in einen so genannten Container C eingebettet.

Unter dem Begriff Container wird hier ein Web-Container verstanden. Dabei handelt es sich um eine Software-Komponente eines Web-Servers, die jegliche Anfragen an alle Arten von Dateien abarbeitet, die serverseitigen Code enthalten. Ein Web-Container ist demnach z.B. nach Anfrage eines Clients für die Zuordnung einer URL zu einem bestimmten Servlet verantwortlich und stellt sicher, dass der URL-Anforderer die richtigen Zugriffsrechte hat. Mit einem solchen Container lassen sich auch Objekte auf einem Bedienfeld, also einer graphischen Benutzeroberfläche, eines Leitsystems einbinden. Auch die zuvor genannten komplexen Kontrollanzeigen CC (Trendanzeigen, XY-Graphen, Meldefolgeanzeigen, so genannte Continuous Function Charts (CFCs) und Sequential Function Charts (SFCs) usw.) werden in der Regel durch Container in Anlagenbildern eingebettet, da somit die zu Grunde liegenden Applikationen serverseitig entkoppelt und verteilt werden können, um ein höheres Maß an Robustheit zu erreichen.

In dem in Fig. 1 gezeigten Ausführungsbeispiel ist die Applikation Appl, welche für die Darstellung der Webcam im Container C des Anlagenbildes AB zuständig ist, auf dem Operation Station Server OS_S2 lokalisiert. Das Anlagenbild AB könnte zusätzlich noch einen weiteren Container, der beispielsweise eine Schrittkettenabfolge anzeigt, umfassen. Dieser zweite Container könnte beispielsweise in einer Applikation auf einem dritten Operation Station Server lokalisiert sein.

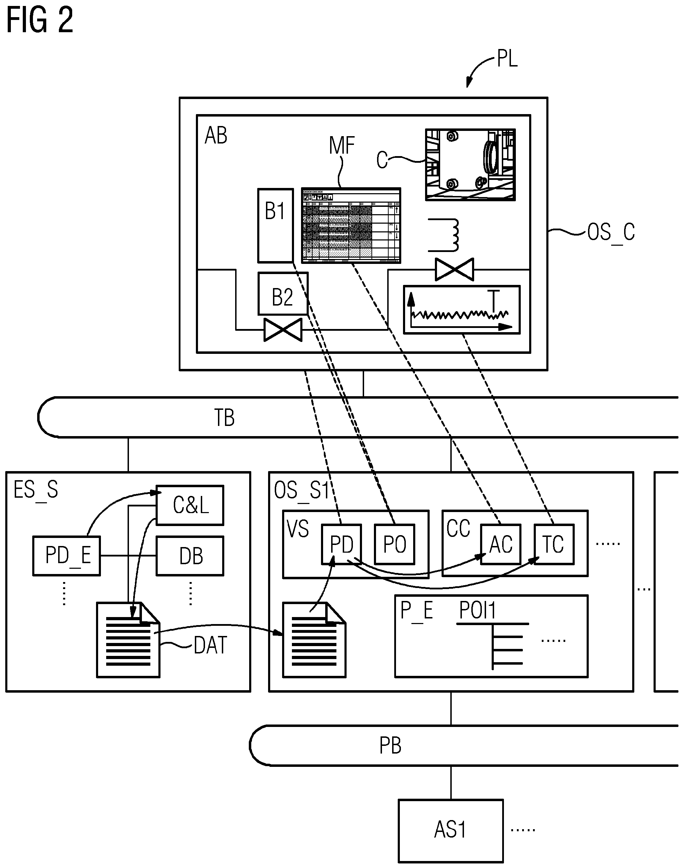

Figur 2 zeigt beispielhaft ein weiteres Funktionsschema des Prozessleitsystems mit angedeuteter Softwarearchitektur zur Implementierung des erfindungsgemäßen Verfahrens. In Fig. 2 ist das Funktionsschema aus Fig. 1 durch eine Engineering-Workstation ES_S ergänzt. Wie bereits erwähnt werden Anlagenbilder in der Engineering-Phase projektiert, d.h. alle Bildelemente, Symbole, Dynamisierungen, komplexe Kontrollanzeigen, Container, usw. werden positioniert und deren Eigenschaften werden festgelegt. Für diese Vorkonfiguration der Anlagenbilder ist die SW-Komponente PD_E im Engineering-Server ES_S zuständig. Im Anlagenbild-Editor PD_E ist demnach hinterlegt, welches Bildelement von welcher Kategorie in einem bestimmten Anlagenbild vorhanden ist. Sie ist mit einer Datenbank DB verbunden, in der sämtliche Projektierungsdaten abgelegt sind.

Im Anlagenbild-Editor sind auch die Zeitdauer für das Zeichnen der Anlagenbilder, deren Bildelementen und die jeweiligen Aktualisierungszeiten im Hinblick auf die Laufzeit hinterlegt. Die statischen Anteile eines Anlagenbildes, wie verfahrenstechnische Symbole, Block-Symbole usw. nehmen erfahrungsgemäß nur einen geringen Anteil der Zeitdauer für das Zeichnen in Anspruch und werden bei der Bilanzierung der Zeitdauer für das Zeichnen durch den Plant Display Editor nur pauschal betrachtet (z.B. 200 ms als angestrebte Zeitdauer für das Zeichnen bei einer anpassbaren Aktualisierungsrate von beispielsweise 2 s). Werden nun komplexe Kontrollanzeigen oder Web-Container projektiert, so steht diesen in Summe die restliche Zeitdauer für das Zeichnen zur Verfügung, die in Abhängigkeit der Anzahl der komplexen Kontrollanzeigen entsprechend bilanziert werden muss. Werden beispielsweise zwei komplexe Kontrollanzeigen wie in dem in den Figuren beispielhaft dargestellten Anlagenbild (Trendanzeige T und Meldefolgeanzeige MF) im Anlagenbild angeordnet, so wird diesen in diesem Ausführungsbeispiel jeweils eine Zeitdauer für das Zeichnen von 900 ms vorgegeben. Können diese jedoch nicht eingehalten werden, sind gemäß der Erfindung die Zeitdauern für das Zeichnen der beiden Bildelemente T und MF dynamisch anzupassen und zusätzlich Abhängigkeiten und/oder Eigenschaften der Bildelemente untereinander zu berücksichtigen.

Überschreitet nun zur Laufzeit (Runtime) ein Bildelement wie eine komplexe-Kontrollanzeige, welche durch einen Web-Container realisiert ist, die ihm durch das Engineering vorgegebene Zeitdauer für das Zeichnen, so kann erfindungsgemäß der durch die Eigenschaft der Zeitdauer für das Zeichnen erweiterte Container eine oder mehrere zuvor im Engineering durch eine Vorschrift festgelegte Maßnahmen einleiten, um die Bedienung und Beobachtung zu stabilisieren.

Bei diesen Maßnahmen kommen sämtliche Ansätze zur Reduzierung der Zeitdauer für das Zeichnen der Bildelemente zum Tragen. Im Folgenden sind beispielhaft einige solcher Maßnahmen für verschiedene Kategorien von Bildelementen genannt:
- Reduktion der Zeitdauer für das Zeichnen bei Trendanzeigen:
   - durch dynamisch adaptive Erhöhung des Aggregationsfaktors (führt zur Reduktion der zu zeichnenden Punkte für eine Trendkurve)
   - durch dynamisch adaptive Erhöhung der Aktualisierungszeiten (der Trend wird seltener mit neuen Prozesswerten aktualisiert, z.B. nicht mehr jede Sekunde, sondern jede zweite - oder bei jedem zweiten Zeichnen des Anlagenbildes)
- Reduktion der Zeitdauer für das Zeichnen bei Meldefolgeanzeigen
   durch dynamisch adaptive Erhöhung der Aktualisierungszeiten (die Meldefolgeanzeige wird seltener aktualisiert, z.B. nicht mehr jede Sekunde, sondern jede zweite Sekunde oder bei jedem zweiten Zeichnen des Anlagenbildes)
- Reduktion der Zeitdauer für das Zeichnen bei Web-Containern wie Webcam-Bildelementen
   durch dynamisch adaptive Erhöhung der Bildrate (das Webcam Bild wird seltener aktualisiert, z.B. nicht mehr jede Sekunde, sondern jede zweite Sekunde oder bei jedem zweiten Zeichnen des Anlagenbildes)

In allen Fällen kann aufgrund der Adaptivität die Zeitdauer für das Zeichnen durch die entgegengesetzte Maßnahme auch wieder erhöht werden. Wird ein Trend oder eine Meldefolgeanzeige seltener aktualisiert, so kann die Einführung eines Korrekturparameters zur Modifikation der Aktualisierungszeit pro Bildelement Parameter sein, der die Zeitdauer für das Zeichnen beeinflusst. Dasselbe gilt für die Bildrate des Eingangssignals des Monitors. Für Bildelemente, innerhalb deren Daten nur selten aktualisiert werden, kann eine niedrige Bildrate eingestellt werden. Soll ein Bildelement schneller dargestellt werden, wird die Bildrate erhöht.

Die Randbedingungen für das Zeichnen eines Anlagenbildes hängen stets auch von der Beschaffenheit des Anlagenbildes ab. Je höher die Anzahl der Container innerhalb eines Anlagenbildes ist, desto wichtiger ist die Vorkonfiguration der entsprechenden Zeitdauer für das Zeichnen, um innerhalb der Anlagenbildaktualisierungs-Zeit nicht andere komplexen Bildelemente zu beeinflussen.

Ferner kann die Anpassung der Zeitdauer für das Zeichnen mit den oben genannten Maßnahmen auch mit bestimmten verfahrenstechnischen Zuständen verknüpft werden. Befindet sich die Anlage in einem stabilen Zustand, in dem sich Prozesswerte kaum ändern, kann bei einer Änderung der Webcam-Anzeige die Zeitdauer für das Zeichnen auf die Darstellung des Web-Containers verwendet werden, während Trendanzeigen nur in geringem Maße verändert werden. Das Anlagenbild kann sich somit dynamisch und adaptiv "Einschwingen" und auf den jeweiligen verfahrenstechnischen Zustand einstellen (z.B. auf höhere Alarmlasten, höhere Volatilität in Trendkurven, usw.). Die Applikationen, die auch auf verschiedenen Servern lokalisiert sein können, arbeiten auf diese Weise zusammen. Indem im Anlagenbild-Editor die Zeitdauer für das Zeichnen für unterschiedlichste Applikationen, unabhängig von deren Lokalisierung, berechnet und angepasst werden, spielen Hardware-Zuordnungen keine Rolle mehr, was insbesondere für Cloud-Anwendungen vorteilhaft ist.

Im Rahmen der SW-Systemarchitektur kann die Erfindung dadurch realisiert werden, dass Objektmodelle der Anlagenbilder erweitert werden, um die Zeitdauer für das Zeichnen der projektierten Bildelemente wie den komplexen Kontrollanzeigen hinterlegen zu können. Die Zeitdauer für das Zeichnen werden bei der Projektierung durch den Plant Display Editor kontinuierlich und automatisch berechnet und mit jeder relevanten Projektierungsänderung nachgerechnet. Ist das derart erweiterte Anlagenbild in die Laufzeit in einen Operation Station Server geladen und wird dieses geöffnet, wird die Visualisierung initialisiert. Hierbei wird jeder Anwendung, die für die Visualisierung der komplexen Controls verantwortlich ist, mitgeteilt, welche Zeitdauer für das Zeichnen ihr pro Anlagenbild-Zyklus zur Verfügung steht (hier in Fig. 2 sind dies die SW-Komponenten AC und TC). Die zur Verfügung stehenden Zeiten sind direkt an den Container projektiert, so dass diese beim Initialisieren der komplexen Kontrollanzeigen unmittelbar berücksichtigt werden können. Von nun an kann jede Applikation die Zeitdauer für das Zeichnen ihres zu dynamisierenden Bildelements selbst überwachen und Maßnahmen einleiten, sollten die Zeitdauer für das Zeichnen überschritten werden.

Die gemäß des erfindungsgemäßen Verfahrens im Anlagenbild-Editor PD_E projektierten Anlagenbilder werden mittels der Komponente C&L kompiliert und als Datei DAT in diesem Ausführungsbeispiel in den Operation Station Server OS_S1 geladen (siehe fett markierte Pfeile in Fig. 2) In der Komponente PD des Visualisierungsdienstes VS werden die Anlagenbilder anschließend zur Laufzeit der Anlage, also während des Betriebs, aus der vorkonfigurierten Datei erzeugt. Dabei wird zur Laufzeit die in der Engineering-Phase vorgegebene Vorschrift bei einer Änderung der in einem Bildelement dargestellten Daten beim Zeichnen der Bildelemente stets berücksichtigt. Der Visualisierungsdienst VS interagiert dabei mit den Komponenten anderer Visualisierungsdienste, beispielsweise mit den Diensten, die für die Darstellung der Trendanzeigen oder der Meldefolgenanzeigen zuständig sind (vgl. Fig. 2) .

## Patentansprüche

1. Verfahren zum Bedienen und Beobachten einer zu steuernden technischen Anlage,
wobei innerhalb einer Aktualisierungszeit ein eine Vielzahl unterschiedlicher Bildelemente umfassendes Anlagenbild (AB) auf einem Operator Station Client (OS_C) gezeichnet wird, wobei innerhalb der Bildelemente Daten von verschiedenen Applikationen dargestellt werden und wobei das Anlagenbild (AB) in einem Visualisierungsdienst (VS) eines Operator-Station-Servers (OS_S1) während des Betriebs der technischen Anlage erzeugt wird, nachdem es in einer Engineering-Phase erstellt und vorkonfiguriert wurde,
**dadurch gekennzeichnet,**
**dass** der Visualisierungsdienst (VS) gemäß einer in der Engineering-Phase vorgegebenen Vorschrift bei einer Änderung der in einem Bildelement dargestellten Daten eine Zeitdauer für das Zeichnen des Anlagenbilds (AB) dynamisch anpasst, wobei zusätzlich Abhängigkeiten und/oder Eigenschaften der Bildelemente untereinander berücksichtigt werden.

2. Verfahren nach Anspruch 1,
**dadurch gekennzeichnet,**
**dass** zu dynamisierende Bildelemente als Web-Container realisiert werden, in denen während des Betriebs der technischen Anlage die Bildelemente gezeichnet werden und welche in entsprechende Applikationen eingebettet sind,
**dass** die Zeitdauer für das Zeichnen der Bildelemente als eine weitere Eigenschaft der jeweiligen Container aufgenommen wird,
**dass** nach Initialisierung des Visualisierungsdienstes (VS) dieser jeder Applikation, die mit der Visualisierung eines Bildelementes in Zusammenhang steht, in Abhängigkeit der Eigenschaften des entsprechenden Containers mitteilt, welche Zeitdauer für das Zeichen des Bildelements während der Aktualisierungszeit zur Verfügung steht.

3. Verfahren nach Anspruch 2,
**dadurch gekennzeichnet,**
**dass** die Applikationen auf einem oder auf unterschiedlichen Servern lokalisiert sind.

4. Verfahren nach Anspruch 1, 2 oder 3,
**dadurch gekennzeichnet,**
**dass** bei der Anpassung der Zeitdauer für das Zeichnen der Bildelemente pro Bildelement die Anzahl der zu zeichnenden Punkte, Korrekturparameter zur Modifikation der Aktualisierungszeit oder Korrekturparameter der Bildrate umfasst sind.

5. Verfahren nach einem der vorhergehenden Ansprüche,
**dadurch gekennzeichnet,**
**dass** bei der Anpassung der Zeitdauer für das Zeichnen auch Parameter oder Werte des in der technischen Anlage ablaufenden Prozesses berücksichtigt werden.

6. Verfahren nach einem der vorhergehenden Ansprüche,
**dadurch gekennzeichnet,**
**dass** Objektmodelle der Anlagenbilder durch die Hinterlegung der Zeitdauer für das Zeichnen der zu dynamisierenden Bildelemente erweitert werden.

7. Bedien- und Beobachtungssystem für ein Prozessleitsystem,
welches einen Prozess in einer technischen Anlage (1) steuert, mit mindestens einem Client (OS_C) und mindestens einem Server (OS_S1, OS_S2,...), welche über mindestens ein Kommunikationsmittel (TB) miteinander verbunden sind,
**dadurch gekennzeichnet,**
**dass** mindestens ein Server (OS_S1) zumindest eine Visualisierungs-Komponente (VS) aufweist, die derart ausgestaltet ist, ein Verfahren gemäß einem der Ansprüche 1 bis 6 auszuführen.

8. Prozessleitsystem zur Steuerung eines Prozesses in einer technischen Anlage, welches ein Bedien- und Beobachtungssystem gemäß Anspruch 7 aufweist.
